# FASCICULE DE BREVET EUROPEEN

(11) **EP 2 801 179 B1**
(45) Date de publication et mention de la délivrance du brevet: **15.08.2018**
(21) Numéro de dépôt: 12842694.7
(22) Date de dépôt: 24.12.2012
(51) Int. Cl.: H04L 29/06, H04L 29/08, G06Q 20/00, G06F 21/62, H04L 12/28, H04W 36/24

(54) **TRANSMISSION SECURISÉE DE DONNÉES**
SICHERE DATENÜBERTRAGUNG
SECURE DATA TRANSMISSION

(30) Priorité: 03.01.2012 FR 1250043
(43) Date de publication de la demande: 12.11.2014
(73) Titulaire: Alcatel Lucent, 91620 Nozay (FR)
(72) Inventeur: TOUBIANA, Vincent, 91620 Nozay (FR); PAPILLON, Serge, 91620 Nozay (FR)
(74) Mandataire: Mouney, Jérôme
(86) Numéro de dépôt international: PCT/EP2012/076865
(87) Numéro de publication internationale: WO 2013/102596

(56) Documents cités:
- EP-A2- 0 889 620
- WO-A1-01/28154
- DE-A1- 10 150 082
- US-A1- 2006 070 126
- US-A1- 2007 244 761
- US-A1- 2010 017 596
- US-A1- 2011 030 039

## Description

La présente invention concerne une transmission sécurisée de données dans des réseaux de télécommunication considérés à risque.

Lorsqu'ils sont connectés à des réseaux non sécurisés, des utilisateurs laissent leur vie privé accessible lors d'établissement de session à des services non sécurisés. Par exemple, lorsqu'ils sont connectés depuis un point d'accès partagé, dans un lieu public, à un service qui ne fournit pas de support TLS ("Transport Layer Security" en anglais), les utilisateurs transmettent leurs identifiants et mots de passe en clair. Un utilisateur malicieux pourrait alors facilement intercepter ces données, récupérer l'identificateur de session et accéder à la session d'utilisateur.

Il existe donc un besoin de réduire de tels risques lorsqu'un utilisateur accède à un service via un réseau de télécommunication.

Le document EP0889620 A2 divulgue la transmission de données confidentielles à travers un réseau sécurisé et la transmission de données non-confidentielles à travers un réseau non sécurisé, afin de réduire de tels risques.

L'invention est définie dans les revendications indépendantes. Les modes de réalisation préférés sont définis dans les revendications dépendantes. Pour remédier aux inconvénients précédents, l'invention concerne un procédé pour transmettre des données de manière sécurisée depuis un terminal de communication d'un utilisateur vers un serveur d'application à travers un réseau de télécommunications, le terminal de communication étant connecté au serveur d'application via un réseau d'accès non sécurisé et étant apte à communiquer avec le serveur d'application via au moins un réseau d'accès sécurisé, le procédé comprenant les étapes suivantes dans le terminal de communication :
lorsque des données personnelles sont susceptibles d'être saisies par l'utilisateur et transmises au serveur d'application, basculer la connexion avec le serveur d'application du réseau d'accès non sécurisé vers un réseau d'accès sécurisé,
transmettre les données personnelles vers le serveur d'application via le réseau d'accès sécurisé,
basculer la connexion avec le serveur d'application du réseau d'accès sécurisé vers un réseau d'accès non sécurisé.

Avantageusement, le système permet d'établir une session sans divulguer de données personnelles, telles que des login et mots de passe, via le réseau d'accès non sécurisé.

Selon une autre caractéristique de l'invention, le serveur d'application peut produire un cookie de session en fonction d'informations contenues dans une requête reçue depuis le terminal de communication et transmet le cookie de session au terminal de communication, le cookie de session comprenant des limitations sur l'utilisation d'un service fourni par le serveur d'application lors de la session.

Un utilisateur peut ainsi créer une session sécurisée qui peut être utilisée par la suite pour accéder à un service via un réseau non sécurisé.

Selon une autre caractéristique de l'invention, la connexion avec le serveur d'application peut basculer du réseau d'accès sécurisé vers un réseau d'accès non sécurisé après réception du cookie de session par le terminal de communication.

Selon une autre caractéristique de l'invention, les données saisies par l'utilisateur peuvent être contrôlées, lorsqu'une page web hébergée par le serveur d'application est accédée par le navigateur web du terminal de communication, et lorsque le terminal de communication est connecté au serveur d'application via un réseau d'accès non sécurisé.

Selon une autre caractéristique de l'invention, les données saisies par l'utilisateur peuvent être contrôlées au cours de la saisie desdites données ou après avoir été saisies lors de leur validation par l'utilisateur en vue d'être transmises au serveur d'application.

Selon une autre caractéristique de l'invention peuvent être contrôlés des champs d'entrée d'une page web accédée par un navigateur web du terminal de communication susceptibles d'être renseignés par des données personnelles, lorsque le terminal de communication est connecté au serveur d'application via un réseau d'accès non sécurisé.

L'invention concerne également un terminal de communication pour transmettre des données de manière sécurisée depuis le terminal de communication vers un serveur d'application à travers un réseau de télécommunications, le terminal de communication étant connecté au serveur d'application via un réseau d'accès non sécurisé et étant apte à communiquer avec le serveur d'application via au moins un réseau d'accès sécurisé, le terminal de communication comprenant :
des moyens pour basculer la connexion avec le serveur d'application du réseau d'accès non sécurisé vers un réseau d'accès sécurisé, lorsque des données personnelles sont susceptibles d'être saisies par l'utilisateur et transmises au serveur d'application,
des moyens pour transmettre les données personnelles vers le serveur d'application via le réseau d'accès sécurisé,
des moyens pour basculer la connexion avec le serveur d'application du réseau d'accès sécurisé vers un réseau d'accès non sécurisé.

L'invention se rapporte encore à un programme d'ordinateur apte à être mis en oeuvre dans un terminal, ledit programme comprenant des instructions qui, lorsque le programme est exécuté dans ledit terminal, réalisent les étapes selon le procédé de l'invention.

La présente invention et les avantages qu'elle procure seront mieux compris au vu de la description ci-après faite en référence aux figures annexées, dans lesquelles :
- la figure 1 est un bloc-diagramme schématique d'un système de communication selon une réalisation de l'invention, et
- la figure 2 est un algorithme d'un procédé de transmission sécurisée de données à un serveur selon une réalisation de l'invention.

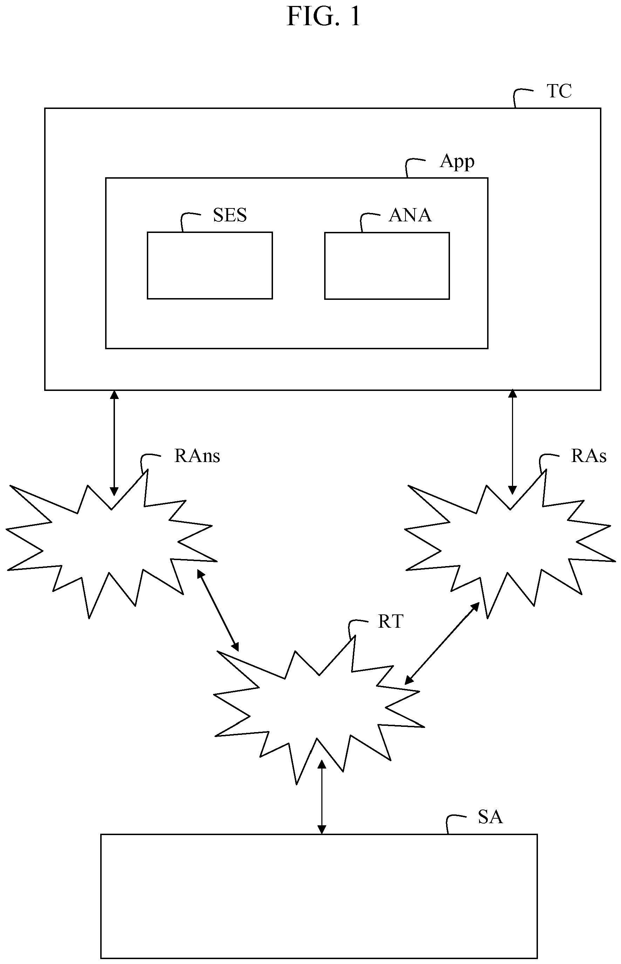

En référence à la figure 1, un système de communication comprend un serveur d'application SA et un terminal de communication TC, aptes à communiquer entre eux à travers un réseau de télécommunications RT.

Le réseau de télécommunications RT peut comprendre des réseaux filaires ou sans fil, ou une combinaison de réseaux filaires et de réseaux sans fil, reliés à un réseau de paquets à haut débit de type IP dans lequel se trouve le serveur d'application SA.

A titre d'exemples, un terminal de communication TC peut être un ordinateur personnel portable, une tablette, ou encore un terminal de radiocommunications cellulaire mobile. Selon un autre exemple, un terminal de communication comprend un dispositif ou objet électronique de télécommunications qui est personnel à l'utilisateur et qui peut être un assistant numérique personnel communicant PDA ("Personnal Digital Assistant" en anglais), ou un téléphone intelligent (SmartPhone).

Le terminal de communication est apte à être connecté au réseau de télécommunications, par exemple via un système d'accès de type GSM ("Global System for Mobile communications" en anglais) et/ou UMTS ("Universal Mobile Télécommunications System" en anglais), et/ou via une borne d'accès d'un réseau public sans fil de faible portée du type WLAN ("Wireless Local Area Network" en anglais) ou conforme à l'une des normes 802.1x, et/ou de moyenne portée selon le protocole WIMAX ("World wide Interoperability Microwave Access" en anglais).

Le terminal de communication TC contient une application App permettant au terminal TC de communiquer avec le serveur d'application SA. Selon un exemple, l'application App est contenue dans un navigateur web. Selon un autre exemple, l'application App est exécutée comme un proxy dans un processus fonctionnant en arrière-plan. Selon encore un autre exemple, l'application App est une interface API ("Application Programming Interface" en anglais) apte à gérer un établissement de session.

Dans une variante, l'application App est incluse dans un autre dispositif connecté au terminal de communication TC, via une liaison de type Bluetooth par exemple.

L'application App contient un module d'analyse ANA et un module de session SES.

Il est considéré que le réseau de télécommunication peut comprendre un ou plusieurs réseaux d'accès RAns dit non sécurisés et un ou plusieurs réseaux d'accès RAs dit sécurisés. Un réseau d'accès dit non sécurisé est un réseau dans lequel il n'y a pas de confidentialité des données transmises, et dans lequel des données peuvent être interceptées par une entité qui n'est pas destinataire des données. A l'inverse, il est considéré qu'un réseau d'accès dit sécurisé est un réseau dans lequel il y a une confidentialité des données transmises, et dans lequel des données ne peuvent pas être interceptées par une entité qui n'est pas destinataire des données. De manière générale, un réseau peut également avoir une réputation d'être non sécurisé, cette réputation pouvant être définie par l'utilisateur lui-même, ou par l'application en évaluant par exemple le nombre d'utilisateurs connectés au réseau, ou encore par un pare-feu communiquant avec l'application.

A titre d'exemple, un réseau d'accès non sécurisé est un réseau public sans fil de faible portée du type WLAN ou conforme à l'une des normes 802.1x, ou de moyenne portée selon le protocole WIMAX. Le réseau d'accès non sécurisé peut être également un réseau de type Ethernet n'implémentant aucun protocole de sécurité ou empêchant de façon matérielle (en cloisonnant les communications avec un Switch par exemple) et prévenant ainsi l'interception des communications.

A titre d'exemple, un réseau d'accès sécurisé est un réseau cellulaire de type GSM ou UMTS. Le réseau d'accès non sécurisé peut être également un réseau de type Ethernet implémentant un protocole de sécurité.

Il est considéré en outre que le réseau d'accès sécurisé a une bande passante plus faible que le réseau d'accès non sécurisé ou que la quantité de données que l'utilisateur peut y faire transiter est moindre. Un utilisateur, déjà connecté via un réseau d'accès non sécurisé avec une large bande passante, peut transmettre des données personnelles via un réseau d'accès sécurisé, même si ce dernier a une bande passante limitée, et utiliser de nouveau le réseau d'accès non sécurisé plus rapide pour utiliser un service donné.

Il est en outre considéré que l'utilisateur souhaite transmettre des données personnelles qui sont des informations privées, secrètes ou confidentielles. A titre d'exemple, des données personnelles contiennent un pseudo, un mot de passe ou des coordonnées relatives à l'utilisateur telles que son nom, son adresse postale, son adresse de messagerie électronique, ou encore son numéro de téléphone.

Le module d'analyse ANA de l'application surveille le type de données à transmettre et transmis depuis le terminal de communication TC à travers le réseau de télécommunications. Lorsque le terminal est connecté à un serveur d'application SA via un réseau non sécurisé, le module d'analyse ANA émet un alerte lorsque qu'un site web requiert la transmission de données sensibles, tel qu'un mot de passe. Par exemple, le module d'analyse ANA peut explorer le code de la page web en cours afin de détecter des champs d'entrée de données personnelles ou peut détecter en temps réel la saisie par l'utilisateur de données personnelles avant leur validation. En outre, l'utilisateur peut lui-même indiquer à l'application un ensemble de données qu'il considère comme des données personnelles.

Lorsque le module d'analyse ANA émet un alerte en détectant que des données personnelles sont sur le point d'être transmises via un réseau non sécurisé, le module d'analyse ANA déclenche le module de session SES pour basculer la connexion vers un réseau sécurisé.

Selon une réalisation, si le module d'analyse ANA repère qu'une page web contient des champs d'entrée susceptibles d'être relatifs à des données personnelles, tel qu'un champ relatif à l'entrée d'un identifiant, mais que l'utilisateur ne saisit pas de données personnelles préalablement définies par lui, tel qu'un faux pseudo, le module d'analyse ANA peut ne pas déclencher le module de session SES pour changer de réseau.

Le module de session SES peut être configuré par l'utilisateur pour indiquer quel type de session doit être établi et quelles permissions sont accordées pour la session. Une session peut ainsi avoir les limitations suivantes pour un service fourni par le serveur d'application:
- lecture seulement (la session ne peut pas modifier le profil de l'utilisateur),
- mise à jour seulement (pour seulement lire les informations publiées par le service depuis la dernière mise à jour, par exemple pour lire seulement les derniers courriers électroniques encore non lus),
- durée de vie courte pour la session,
- session liée à l'adresse IP (ce qui suppose que le terminal de communication connaît sa propre adresse IP publique),
- d'autres limitations spécifiques au service (par exemple un nombre limité d'actualisation de localisation).

Selon une réalisation, le module de session SES peut empêcher le navigateur web d'accepter un cookie de session qui n'est pas transmis via une connexion sécurisée.

De telles limitations sont définies dans un témoin de connexion ou dans un cookie de session relative au service par le serveur d'application SA sur requête du module de session SES. Le terminal de communication TC reçoit alors le cookie via la connexion sécurisée et le module de session SES peut basculer la connexion à nouveau vers un réseau non sécurisé. Du point de vue du navigateur, aucune opération supplémentaire n'est requise puisque le cookie n'est pas affecté par la connectivité du terminal de communication.

Le cookie de session avec de telles limitations permet en outre d'informer le serveur d'application SA que les prochains échanges avec le terminal de communication TC seront effectuer via une connexion non sécurisée.

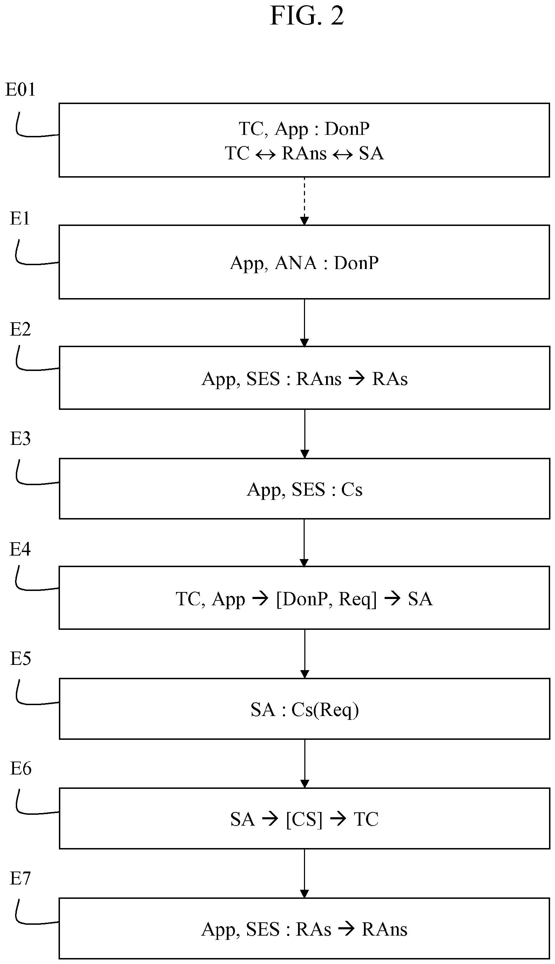

En référence à la figure 2, un procédé de transmission sécurisée de données selon une réalisation de l'invention comprend des étapes E1 à E6 exécutées dans le système de communication.

A une étape préliminaire E01, l'utilisateur définit optionnellement un ensemble de données personnelles DonP au moyen de l'application App implémentée dans le terminal de communication TC.

L'utilisateur se connecte alors au serveur d'application SA via le terminal de communication TC1. Le terminal de communication TC reçoit un premier cookie dit de connexion permettant au navigateur web de garder l'identificateur du serveur d'application SA. Il est considéré que le terminal de communication TC est connecté au serveur d'application SA via un réseau d'accès RAns non sécurisé.

A l'étape E1, le module d'analyse ANA de l'application App contrôle les données saisies par l'utilisateur et à transmettre depuis le terminal de communication TC vers le serveur d'application SA à travers le réseau de télécommunications, lorsqu'une page web hébergée par le serveur d'application est accédée par le navigateur web du terminal. Le module d'analyse ANA de l'application App contrôle en outre des champs d'entrée d'une page web, hébergée par le serveur d'application et accédée par le navigateur web du terminal, susceptibles d'être renseignés par des données personnelles. Le terminal étant connecté au serveur d'application SA via un réseau d'accès non sécurisé, le module d'analyse ANA émet une alerte lorsque des données personnelles DonP sont susceptibles d'être saisies par l'utilisateur et d'être transmises au serveur d'application. Ainsi, une alerte peut être émise dans trois cas :
- lorsque des données personnelles DonP sont susceptibles d'être saisies par l'utilisateur mais ne sont pas encore saisies, dès que l'application accède à la page web,
- lorsque l'utilisateur est en train de saisir des données personnelles DonP ou dès que l'utilisateur a fini la saisie des données personnelles DonP identifiées comme telles,
- lorsque l'utilisateur valide des données personnelles DonP qu'il a saisies pour les transmettre, les données personnelles DonP étant sur le point d'être transmises au serveur d'application.

A l'étape E2, le module de session SES bascule la connexion avec le serveur d'application SA du réseau d'accès RAns non sécurisé vers un réseau d'accès RAs sécurisé, si ce dernier existe. A cette fin, le module d'analyse ANA identifie les différents réseaux d'accès sécurisés disponibles, et en sélectionne un d'après des critères prédéfinis, basés par exemple sur des préférences d'utilisateur et des caractéristiques techniques du réseau d'accès. La connexion avec le serveur d'application SA n'est pas interrompue pour l'utilisateur puisque le navigateur web peut utiliser le premier cookie dit de connexion pour communiquer avec le serveur d'application SA.

A l'étape E3, le module de session SES invite l'utilisateur à définir des limitations pour une ou plusieurs prochaines sessions entre le terminal de communication TC et le serveur d'application SA. De telles limitations indiquent des permissions accordées pour lesdites prochaines sessions.

De telles limitations sont à transmettre sur requête du module de session SES au serveur d'application SA afin que ce dernier produise un témoin de connexion ou un cookie de session Cs prenant en compte ces limitations.

Selon une réalisation, l'ordre des étapes E2 et E3 peut être inversé.

A l'étape E4, l'application App autorise la transmission des données personnelles DonP vers le serveur d'application SA via le réseau d'accès RAs sécurisé et transmet une requête Req contenant des limitations pour un cookie de session.

A l'étape E5, le serveur d'application SA reçoit les données personnelles DonP et la requête Req. Le serveur SA produit un cookie de session Cs en fonction des informations contenues dans la requête Req reçue.

A l'étape E6, le serveur d'application SA transmet le cookie de session Cs au terminal de communication TC.

A l'étape E7, le module de session SES détecte la réception du cookie de session Cs et bascule la connexion avec le serveur d'application SA du réseau d'accès sécurisé RAs vers un réseau d'accès RAns non sécurisé, qui peut être le réseau d'accès non sécurisé initial.

Les étapes E1 à E7 peuvent être répétées. Lors d'une première itération des étapes, les données personnelles DonP peuvent être un identificateur d'utilisateur et un mot de passe, permettant d'authentifier l'utilisateur auprès d'un site web hébergé par le serveur d'application SA. Une fois authentifié, l'utilisateur peut interagir avec le site web dans la limite des permissions incluses dans le cookie de session, l'application App surveillant toujours des données personnelles susceptibles d'être transmises via le réseau d'accès non sécurisé, telles que des informations privées comme un nom ou une adresse.

L'invention décrite ici concerne un procédé et un terminal pour une transmission sécurisée de données. Selon une implémentation de l'invention, les étapes du procédé de l'invention sont déterminées par les instructions d'un programme d'ordinateur incorporé dans un terminal, tel que le terminal de communication TC, le programme dictant le comportement d'au moins une application logicielle telle que l'application App. Le programme comporte des instructions de programme, qui lorsque ledit programme est chargé et exécuté dans le terminal, réalisent les étapes du procédé de l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou code intermédiaire entre code source et code objet tel que dans une forme partiellement compilée, ou dans n'importe quelle autre forme souhaitable pour implémenter le procédé selon l'invention.

## Revendications

1. Procédé pour transmettre des données de manière sécurisée depuis un terminal de communication (TC) d'un utilisateur vers un serveur d'application (SA) à travers un réseau de télécommunications (RT), le terminal de communication (TC) étant connecté au serveur d'application (SA) via un réseau d'accès (RAns) non sécurisé et étant apte à communiquer avec le serveur d'application (SA) via au moins un réseau d'accès (RAs) sécurisé, le procédé comprenant les étapes suivantes dans le terminal de communication (TC) :
lorsque des données personnelles (DonP) sont susceptibles d'être saisies par l'utilisateur et transmises au serveur d'application (SA), basculer (E2) la connexion avec le serveur d'application (SA) du réseau d'accès (RAns) non sécurisé vers un réseau d'accès (RAs) sécurisé,
transmettre (E4) les données personnelles (DonP) et une requête (Req) contenant des informations pour la production d'un cookie de session vers le serveur d'application (SA) via le réseau d'accès (RAs) sécurisé, les informations comprenant des limitations pour une ou plusieurs prochaines sessions entre le terminal de communication (TC) et le serveur d'application (SA), recevoir (E6) un cookie de session (Cs) produit par le serveur d'application (SA), le cookie de session (Cs) comprenant des limitations sur l'utilisation d'un service fourni par le serveur d'application (SA), suite à la détection de la réception du cookie de session (Cs), basculer (E7) la connexion avec le serveur d'application (SA) du réseau d'accès sécurisé (RAs) vers un réseau d'accès (RAns) non sécurisé.

2. Procédé conforme à la revendication 1, selon lequel sont contrôlées les données saisies par l'utilisateur, lorsqu'une page web hébergée par le serveur d'application est accédée par le navigateur web du terminal de communication (TC), et lorsque le terminal de communication (TC) est connecté au serveur d'application (SA) via un réseau d'accès (RAns) non sécurisé.

3. Procédé conforme à la revendication 2, selon lequel les données saisies par l'utilisateur sont contrôlées au cours de la saisie desdites données ou après avoir été saisies lors de leur validation par l'utilisateur en vue d'être transmises au serveur d'application.

4. Procédé conforme à l'une des revendications 1 à 3, selon lequel sont contrôlés des champs d'entrée d'une page web accédée par un navigateur web du terminal de communication (TC) susceptibles d'être renseignés par des données personnelles, lorsque le terminal de communication (TC) est connecté au serveur d'application (SA) via un réseau d'accès (RAns) non sécurisé.

5. Procédé conforme à l'une des revendications 1 à 4, selon lequel un réseau d'accès non sécurisé est un réseau dans lequel il n'y a pas de confidentialité des données transmises et dans lequel des données peuvent être interceptées par une entité qui n'est pas destinataire des données.

6. Procédé conforme à l'une des revendications 1 à 5, selon lequel un réseau d'accès sécurisé est un réseau dans lequel il y a une confidentialité des données transmises et dans lequel des données ne peuvent pas être interceptées par une entité qui n'est pas destinataire des données.

7. Terminal de communication (TC) pour transmettre des données de manière sécurisée depuis le terminal de communication (TC) vers un serveur d'application (SA) à travers un réseau de télécommunications (RT), le terminal de communication (TC) étant connecté au serveur d'application (SA) via un réseau d'accès (RAns) non sécurisé et étant apte à communiquer avec le serveur d'application (SA) via au moins un réseau d'accès (RAs) sécurisé, le terminal de communication (TC) comprenant :
des moyens (SES) pour basculer la connexion avec le serveur d'application (SA) du réseau d'accès (RAns) non sécurisé vers un réseau d'accès (RAs) sécurisé, lorsque des données personnelles (DonP) sont susceptibles d'être saisies par l'utilisateur et transmises au serveur d'application (SA),
des moyens (SES) pour transmettre les données personnelles (DonP) et une requête (Req) contenant des informations pour la production d'un cookie de session vers le serveur d'application (SA) via le réseau d'accès (RAs) sécurisé, les informations comprenant des limitations pour une ou plusieurs prochaines sessions entre le terminal de communication (TC) et le serveur d'application (SA), recevoir (E6) un cookie de session (Cs) produit par le serveur d'application (SA), le cookie de session (Cs) comprenant des limitations sur l'utilisation d'un service fourni par le serveur d'application (SA), des moyens (SES) pour basculer la connexion avec le serveur d'application (SA) du réseau d'accès sécurisé (RAs) vers un réseau d'accès (RAns) non sécurisé, suite à la détection de la réception du cookie de session (Cs).

8. Programme d'ordinateur apte à être mis en oeuvre dans un terminal de communication (TC) pour transmettre des données de manière sécurisée depuis le terminal de communication (TC) vers un serveur d'application (SA) à travers un réseau de télécommunications (RT), le terminal de communication (TC) étant connecté au serveur d'application (SA) via un réseau d'accès (RAns) non sécurisé et étant apte à communiquer avec le serveur d'application (SA) via au moins un réseau d'accès (RAs) sécurisé, ledit programme comprenant des instructions qui, lorsque le programme est chargé et exécuté dans ledit terminal de communication (TC), réalisent les étapes suivantes :
lorsque des données personnelles (DonP) sont susceptibles d'être saisies par l'utilisateur et transmises au serveur d'application (SA), basculer (E2) la connexion avec le serveur d'application (SA) du réseau d'accès (RAns) non sécurisé vers un réseau d'accès (RAs) sécurisé,
transmettre (E4) les données personnelles (DonP) et une requête (Req) contenant des informations pour la production d'un cookie de session vers le serveur d'application (SA) via le réseau d'accès (RAs) sécurisé, les informations comprenant des limitations pour une ou plusieurs prochaines sessions entre le terminal de communication (TC) et le serveur d'application (SA), recevoir (E6) un cookie de session (Cs) produit par le serveur d'application (SA), le cookie de session (Cs) comprenant des limitations sur l'utilisation d'un service fourni par le serveur d'application (SA), suite à la détection de la réception du cookie de session (Cs), basculer (E7) la connexion avec le serveur d'application (SA) du réseau d'accès sécurisé (RAs) vers un réseau d'accès (RAns) non sécurisé.

## Patentansprüche

1. Verfahren zur gesicherten Datenübertragung von einem Kommunikations-Endgerät (TC) eines Benutzers an einen Anwendungsserver (SA) über ein Telekommunikationsnetz (RT), wobei das Kommunikations-Endgerät (TC) mit dem Anwendungsserver (SA) über ein nicht gesichertes Zugangsnetz (RAns) verbunden ist und imstande ist, mit dem Anwendungsserver (SA) über mindestens ein gesichertes Zugangsnetz (RAs) zu kommunizieren, wobei das Verfahren die folgenden Schritte in dem Kommunikations-Endgerät (TC) umfasst:
wenn persönliche Daten (DonP) von dem Benutzer eingegeben und an den Anwendungsserver (SA) übertragen werden, Umschalten (E2) der Verbindung mit dem Anwendungsserver (SA) des nicht gesicherten Zugangsnetzes (RAns) zu einem gesicherten Zugangsnetz (RAs),
Übertragen (E4) der persönlichen Daten (DonP) und einer Anforderung (Req), die Informationen für die Produktion eines Sitzungscookies enthält, an den Anwendungsserver (SA) über das gesicherte Zugangsnetz (RAs), wobei die Informationen Beschränkungen für eine oder mehrere nächste Sitzungen zwischen dem Kommunikations-Endgerät (TC) und dem Anwendungsserver (SA) umfassen,
Empfangen (E6) eines von dem Anwendungsserver (SA) produzierten Sitzungscookies (Cs), wobei das Sitzungscookie (Cs) Beschränkungen für die Verwendung eines von dem Anwendungsserver (SA) bereitgestellten Services umfasst,
nach der Feststellung des Empfangs des Sitzungscookies (Cs), Umschalten (E7) der Verbindung mit dem Anwendungsserver (SA) des gesicherten Zugangsnetzes (RAs) zu einem nicht gesicherten Zugangsnetz (RAns).

2. Verfahren nach Anspruch 1, wobei die von dem Benutzer eingegebenen Daten kontrolliert werden, wenn eine von dem Anwendungsserver gehostete Webseite von dem Webbrowser des Kommunikations-Endgeräts (TC) erreicht wird und wenn das Kommunikations-Endgerät (TC) mit dem Anwendungsserver (SA) über ein nicht gesichertes Zugangsnetz (RAns) verbunden ist.

3. Verfahren nach Anspruch 2, wobei die von dem Benutzer eingegebenen Daten während der Eingabe der Daten oder nach der Eingabe bei ihrer Validierung durch den Benutzer zwecks Übertragung an den Anwendungsserver kontrolliert werden.

4. Verfahren nach einem der Ansprüche 1 bis 3, wobei Eingabefelder, in die persönliche Daten eingegeben werden, einer von einem Webbrowser des Kommunikations-Endgeräts (TC) erreichten Webseite kontrolliert werden, wenn das Kommunikations-Endgerät (TC) mit dem Anwendungsserver (SA) über ein nicht gesichertes Zugangsnetz (RAns) verbunden ist.

5. Verfahren nach einem der Ansprüche 1 bis 4, wobei ein nicht gesichertes Zugangsnetz ein Netz ist, in welchem es keine Vertraulichkeit der übertragenen Daten gibt und in welchem Daten von einer Einheit abgefangen werden können, die nicht der Empfänger der Daten ist.

6. Verfahren nach einem der Ansprüche 1 bis 5, wobei ein gesichertes Zugangsnetz ein Netz ist, in welchem es eine Vertraulichkeit der übertragenen Daten gibt und in welchem Daten nicht von einer Einheit abgefangen werden können, die nicht der Empfänger der Daten ist.

7. Kommunikations-Endgerät (TC) zur gesicherten Datenübertragung von dem Kommunikations-Endgerät (TC) an einen Anwendungsserver (SA) über ein Telekommunikationsnetz (RT), wobei das Kommunikations-Endgerät (TC) mit dem Anwendungsserver (SA) über ein nicht gesichertes Zugangsnetz (RAns) verbunden ist und imstande ist, mit dem Anwendungsserver (SA) über mindestens ein gesichertes Zugangsnetz (RAs) zu kommunizieren, wobei das Kommunikations-Endgerät (TC) umfasst:
Mittel (SES) zum Umschalten der Verbindung mit dem Anwendungsserver (SA) des nicht gesicherten Zugangsnetzes (RAns) zu einem gesicherten Zugangsnetz (RAs), wenn persönliche Daten (DonP) von einem Benutzer eingegeben und an den Anwendungsserver (SA) übertragen werden,
Mittel (SES) zum Übertragen der persönlichen Daten (DonP) und einer Anforderung (Req), die Informationen für die Produktion eines Sitzungscookies enthält, an den Anwendungsserver (SA) über das gesicherte Zugangsnetz (RAs), wobei die Informationen Beschränkungen für eine oder mehrere nächste Sitzungen zwischen dem Kommunikations-Endgerät (TC) und dem Anwendungsserver (SA) umfassen,
Empfangen (E6) eines von dem Anwendungsserver (SA) produzierten Sitzungscookies (Cs), wobei das Sitzungscookie (Cs) Beschränkungen für die Verwendung eines von dem Anwendungsserver (SA) bereitgestellten Services umfasst,
Mittel (SES) zum Umschalten (E7) der Verbindung mit dem Anwendungsserver (SA) des gesicherten Zugangsnetzes (RAs) zu einem nicht gesicherten Zugangsnetz (RAns) nach der Feststellung des Empfangs des Sitzungscookies (Cs).

8. Rechnerprogramm, das imstande ist, in einem Kommunikations-Endgerät (TC) umgesetzt zu sein, um Daten gesichert von dem Kommunikations-Endgerät (TC) an einen Anwendungsserver (SA) über ein Telekommunikationsnetz (RT) zu übertragen, wobei das Kommunikations-Endgerät (TC) mit dem Anwendungsserver (SA) über ein nicht gesichertes Zugangsnetz (RAns) verbunden ist und imstande ist, mit dem Anwendungsserver (SA) über mindestens ein gesichertes Zugangsnetz (RAs) zu kommunizieren, wobei das Programm Befehle umfasst, welche, wenn das Programm in dem Kommunikations-Endgerät (TC) geladen ist und ausgeführt wird, die folgenden Schritte durchführen:
wenn persönliche Daten (DonP) von dem Benutzer eingegeben und an den Anwendungsserver (SA) übertragen werden, Umschalten (E2) der Verbindung mit dem Anwendungsserver (SA) des nicht gesicherten Zugangsnetzes (RAns) zu einem gesicherten Zugangsnetz (RAs),
Übertragen (E4) der persönlichen Daten (DonP) und einer Anforderung (Req), die Informationen für die Produktion eines Sitzungscookies enthält, an den Anwendungsserver (SA) über das gesicherte Zugangsnetz (RAs), wobei die Informationen Beschränkungen für eine oder mehrere nächste Sitzungen zwischen dem Kommunikations-Endgerät (TC) und dem Anwendungsserver (SA) umfassen,
Empfangen (E6) eines von dem Anwendungsserver (SA) produzierten Sitzungscookies (Cs), wobei das Sitzungscookie (Cs) Beschränkungen für die Verwendung eines von dem Anwendungsserver (SA) bereitgestellten Services umfasst,
nach der Feststellung des Empfangs des Sitzungscookies (Cs), Umschalten (E7) der Verbindung mit dem Anwendungsserver (SA) des gesicherten Zugangsnetzes (RAs) zu einem nicht gesicherten Zugangsnetz (RAns).

## Claims

1. A method for transmitting data in a secure fashion from a communication terminal (TC) of a user to an application server (SA) through a telecommunications network (RT), the communication terminal (TC) being connected to the application server (SA) via a non-secure access network (RAns) and being able to communicate with the application server (SA) via at least one secure access network (RAs), the method comprising the following steps in a communication terminal (TC):
when personal data (DonP) is likely to be entered by the user and transmitted to the application server (SA), switching (E2) the connection with the application server (SA) from the non-secure access network (RAns) to a secure access network (RAs),
transmitting (E4) the personal data (DonP) and a query (Req) containing information for the production of a session cookie to the application server (SA) via the secure access network (RAs), the information comprising limitations for one or more later sessions between the communication terminal (TC) and the application server (SA),
receiving (E6) a session cookie (Cs) produced by the application server (SA), the session cookie (Cs) comprising limits on the use of a service provided by the application server (SA),
after the detection of the receipt of the session cookie (Cs), switching (E7) the connection with the application server (SA) from the secure access network (RAs) to a non-secure access network (RAns).

2. A method according to claim 1, whereby the data entered by the user is checked, when a web page hosted by the application server, is accessed by the web browser of the communication terminal (TC), and when the communication terminal (TC) is connected to the application server (SA) via a non-secure access network (RAns).

3. A method according to claim 2, whereby the data entered by the user is checked during the input of said data or after having been entered when approved by the user in order to be transmitted to the application server.

4. A method according to one of the claims 1 to 3, whereby the input fields of a web page accessed by a web browser of the communication terminal (TC) likely to be completed with personal data are checked, when the communication terminal (TC) is connected to the application server (SA) via a non-secure access network (RAns).

5. A method according to one of the claims 1 to 4, whereby a non-secure access network is a network in which there is no confidentiality for the data transmitted and in which data can be intercepted by an entity that is not the recipient of the data.

6. A method according to any one of the claims 1 to 5, whereby a secure access network is a network in which there is confidentiality for the data transmitted and in which data cannot be intercepted by an entity that is not the recipient of the data.

7. A communication terminal (TC) to transmit data securely from the communication terminal (TC) to an application server (SA) through a telecommunications network (RT), the communication terminal (TC) being connected to the application server (SA) via a non-secure access network (RAns) and being able to communicate with the application server (SA) via at least one secure access network (RAs), the communication terminal (TC) comprising:
means (SES) for switching the connection with the application server (SA) from the non-secure access network (RAns) to a secure access network (RAs), when personal data (DonP) is likely to be entered by the user and transmitted to the application server (SA),
means (SES) for transmitting the personal data (DonP) and a query (Req) containing information for the production of a session cookie to the application server (SA) via the secure access network (RAs), the information comprising limitations for one or more later sessions between the communication terminal (TC) and the application server (SA),
receiving (E6) a session cookie (Cs) produced by the application server (SA), the session cookie (Cs) comprising limits on the use of a service provided by the application server (SA),
means (SES) for switching the connection with the application server (SA) from the secure access network (RAs) to a non-secure access network (RAns), after the detection of the receipt of the session cookie (Cs).

8. A computer program able to be implemented in a communication terminal (TC) for transmitting data securely from the communication terminal (TC) to an application server (SA) through a telecommunications network (RT), the communication terminal (TC) being connected to the application server (SA) via a non-secure access network (RAns) and being able to communicate with the application server (SA) via at least one secure access network (RAs), said program comprising instructions which, when the program is loaded and executed within said communications terminal (TC), carry out the following steps:
when personal data (DonP) is likely to be entered by the user and transmitted to the application server (SA), switching (E2) the connection with the application server (SA) from the non-secure access network (RAns) to a secure access network (RAs),
transmitting (E4) the personal data (DonP) and a query (Req) containing information for the production of a session cookie to the application server (SA) via the secure access network (RAs), the information comprising limitations for one or more later sessions between the communication terminal (TC) and the application server (SA),
receiving (E6) a session cookie (Cs) produced by the application server (SA), the session cookie (Cs) comprising limits on the use of a service provided by the application server (SA),
after the detection of the receipt of the session cookie (Cs), switching (E7) the connection with the application server (SA) from the secure access network (RAs) to a non-secure access network (RAns).
